# EUROPÄISCHE PATENTSCHRIFT

(11) **EP 1 828 719 B1**
(45) Veröffentlichungstag und Bekanntmachung des Hinweises auf die Patenterteilung: **17.02.2016**
(21) Anmeldenummer: 05811010.7
(22) Anmeldetag: 29.11.2005
(51) Int. Cl.: G01D 3/08, G01N 27/416

(54) **VERFAHREN ZUR FUNKTIONSÜBERWACHUNG EINES SENSORS**
METHOD FOR MONITORING SENSOR FUNCTION
PROCEDE POUR SURVEILLER LE FONCTIONNEMENT D'UN CAPTEUR

(30) Priorität: 23.12.2004 DE 102004063468
(43) Veröffentlichungstag der Anmeldung: 05.09.2007
(73) Patentinhaber: Endress+Hauser Conducta Gesellschaft für Mess- und Regeltechnik mbH+Co. KG, 70839 Gerlingen (DE)
(72) Erfinder: PECHSTEIN, Torsten, 01445 Radebeul (DE); STRAUB, Hermann, 72108 Rottenburg (DE); TISCHENDORF, Axel, 71229 Leonberg (DE)
(74) Vertreter: Andres, Angelika Maria
(86) Internationale Anmeldenummer: PCT/EP2005/056331
(87) Internationale Veröffentlichungsnummer: WO 2006/069879

(56) Entgegenhaltungen:
- WO-A-2004/025223
- DE-A1- 10 209 318
- PATENT ABSTRACTS OF JAPAN Bd. 2002, Nr. 12, 12. Dezember 2002 (2002-12-12) -& JP 2002 228495 A (YOKOGAWA ELECTRIC CORP; JAPAN ATOM POWER CO LTD:THE; YOKOGAWA ENGINEER), 14. August 2002 (2002-08-14)
- PATENT ABSTRACTS OF JAPAN Bd. 017, Nr. 643 (P-1651), 29. November 1993 (1993-11-29) -& JP 05 209858 A (NGK INSULATORS LTD), 20. August 1993 (1993-08-20)

## Beschreibung

Die vorliegende Erfindung betrifft ein Verfahren zur Funktionsüberwachung eines Sensors, insbesondere eines potentiometrischen Sensors.

Einfache Bedienung, Sicherheit und Zuverlässigkeit sind die wichtigsten Anforderungen an Messstellen zur Überwachung von Prozessen, sei es aus Gründen der Prozessoptimierung oder zur Überwachung und Einhaltung von Grenzwerten. Messstellen heute liefern dem Betreiber die Information des Messwertes und, in einigen wenigen Fällen, zusätzlich eine Information über den aktuellen Zustand des Systems. Hierbei wird z.B. überwacht, ob Grenzwerte aktuell überschritten sind oder ob und wie sensorspezifische Parameter, wie die Glasimpedanz eines pH-Sensors, erfüllt sind. Die Überwachung bezieht sich also auf aktuelle Ereignisse. Insofern als ein Anlagenfehlverhalten oder gar ein Anlagenausfall im Vergleich zum Preis des Sensors sehr hohe Kosten verursacht, ist es wichtiger, ein solches Fehlverhalten der Messstelle im Vorfeld weitestgehend auszuschließen, wobei dem korrekten und gesicherten Messwert besondere Bedeutung zukommt.

In der WO2004/025223 offenbaren Wittmer et.al. ein Verfahren zur Funktionsüberwachung eines Sensors, bei dem anhand der zeitlichen Entwicklung von Sensorparametern, beispielsweise periodisch erfassten Kalibrierdaten, eine Prognose zur verbleibenden Standzeit des Sensors bis zu einem erforderlichen Austausch gegeben wird.

In der DE 102 09 318 A1 wird ein Verfahren zur Ermittlung der Reststandzeit eines Messensors angegeben. Dazu werden Daten wie Nullpunkt und Steilheit bei jeder Kalibrierung ermittelt und basierend auf einer Extrapolation der zeitlichen Entwicklung dieser Daten die Reststandzeit des Sensors ermittelt.

In JP 2002-228495 ist ein Verfahren zur Bewertung einer Erneuerungszeitspanne eines Messgeräts zur Verlängerung des Kalibrationszyklus angegeben. Hierzu wird ein charakteristischer Wert des Messgeräts basierend auf den letzten Kalibrationsdaten bestimmt. Aus einer Zeitabhängigkeit des charakteristischen Werts wird geprüft, ob eine geplante nächste Neukalibrierung ausfallen kann. Wenn eine Abnutzungstendenz des Messgeräts aus dem zeitlichen Verlauf des charakteristischen Werts zu erkennen ist, wird über eine Erneuerung des Messgeräts entschieden.

Unabhängig von der Frage der verbleibenden Standzeit, ist es jedoch erforderlich, die Messgenauigkeit des Sensors über die gesamte Standzeit möglichst sicher zu qualifizieren. Um diese Sicherheit zu gewinnen, ist der Betreiber heute darauf angewiesen, diese Rekalibrierung / Rejustierung bei wichtigen Prozessen sehr häufig vorzunehmen, obwohl das Sensorsystem noch absolut korrekt arbeiten würde. Damit wird insbesondere Zeit, aber auch Material unnötig eingesetzt.

Es ist daher die Aufgabe der vorliegenden Erfindung, ein Verfahren zur Funktionsüberwachung eines Sensors und einen Sensor mit integriertem System zur Funktionsüberwachung bereitzustellen.

Die Aufgabe wird erfindungsgemäß gelöst durch das Verfahren gemäß des unabhängigen Patentanspruchs 1.

Das erfindungsgemäße Verfahren zur Funktionsüberwachung eines Sensors umfasst:
wiederholtes Erfassen von Datensätzen mit sensorspezifischen Kalibrierdaten;
Speichern der erfassten Datensätze mit sensorspezifischen Kalibrierdaten;
Analyse der zeitlichen Entwicklung der Kalibrierdaten anhand der gespeicherten Datensätze;
und Bestimmen einer mit einem Belastungsfaktor gewichteten Zeit bis zur nächsten Kalibrierung zumindest anhand der zeitlichen Entwicklung der Kalibrierdaten.

Die ermittelte mit einem Belastungsfaktor gewichtete Zeit können beispielsweise unmittelbar nach der Bestimmung in geeigneter Form ausgegeben werden, damit die Kalibrierung langfristig geplant werden kann, und / oder sie können als Datum oder Restzeit gespeichert werden. Durch Vergleich mit einem Zeitsignal oder durch Herunterzählen der Restzeit kann bei Fälligkeit einer neuen Kalibration ein Anforderungssignal ggf. mit einem gewünschten Vorlauf ausgegeben werden.

Typische Kalibrierdaten sind beispielsweise im Falle eines potentiometrischen Sensors, insbesondere eines pH-Sensors, Steilheit und Nullpunkt bzw. Isothermenschnittpunkt.

Das wiederholte Erfassen von Datensätzen kann mit der Inbetriebnahme beispielsweise eines neuen Sensors zunächst nach mindestens einem vorgegebenen Zeitintervall erfolgen, welches auf Erfahrungswerten beruht, da für den individuellen Sensor zunächst noch keine Kalibrierdaten von der tatsächlichen Messstelle vorliegen. Dieses vorgegebene Zeitintervall kann eine Werksvorgabe sein, vom Benutzer vorgegeben werden, oder anhand von Randbedingungen ermittelt werden. Zu diesen Randbedingungen können neben der angestrebten Messgenauigkeit z. B. Belastungsäquivalente gehören, welche beispielsweise von Temperatur pH-Wert und Partikelfracht des Messmediums abhängen können.

Sobald nach einem ersten Zeitintervall ein zweiter Datensatz der gleichen sensorspezifischen Kalibrierdaten aufgenommen ist, kann die Veränderung der Kalibrierdaten zur Bestimmung des nächsten Kalibrierzeitpunktes bzw. des Zeitraums bis zur nächsten Kalibration herangezogen werden.

Zur Analyse der zeitlichen Entwicklung der Kalibrierdaten kann insbesondere die Differenz zu den Kalibrierdaten des vorherigen Datensatzes berechnet werden.

In die Bestimmung des nächsten Zeitpunkts für eine Kalibrierung bzw. eine Justierung können neben der Veränderung der Kalibrierdaten die vergangene Zeit seit der vorausgegangenen Kalibrierung und Randbedingungen wie minimal zulässige Steilheit bzw. maximale Nullpunktverschiebung eingehen.

Im einfachsten Fall kann die Bestimmung des nächsten Kalibrierzeitpunkts unter Zugrundelegen eines linearen Verhaltens des Sensors erfolgen. D.h. es kann die zeitliche Entwicklung der Kalibrierdaten linear extrapoliert werden, und der nächste Kalibrierzeitpunkt, wird rechtzeitig vor dem erwarteten Erreichen eines kritischen Wertes gesetzt. Unter der Voraussetzung gleich bleibender Prozessbedingungen wird diese Voraussage immer genauer, je mehr Kalibrierdatensätze zur Berechnung herangezogen werden können. Unter Einbeziehen von weiteren Sensorkenndaten wie Gesamtbetriebsdauer oder Belastungsdaten kann auch ein differenzierterer Algorithmus eingesetzt werden. Beispielsweise kann die abgelaufene Zeit mit einem Belastungsfaktor gewichtet werden in den beispielsweise die oben genannten Belastungsparameter eingehen können. In dieser Ausgestaltung der Erfindung wird ein Anforderungssignal für eine Kalibrierung angefordert, wenn beispielsweise das Integral oder Belastung über die Zeit oder die Summe von Belastungsäquivalenten über Zeitintervalle seit der letzten Kalibration einen gewissen Belastungszeitwert erreicht hat.

Hierzu misst der pH-Sensor mit dem pH-Wert zugleich einen wesentlichen Belastungsparameter. Viele pH-Messumformer weisen zudem einen Temperatursensor auf, so dass die Parameter zur Bestimmung des Belastungsintegrals über die Zeit unmittelbar verfügbar sind. Extremwerte belasten Sensoren stärker als moderate Werte, am Beispiel eines pH-Sensors heißt dies , pH Werte um 0 bzw. 14 belasten einen Sensor mehr als pH-Wert 7. Hohe Temperaturen belasten ebenfalls höher als moderate Temperaturen, sodass folglich eine Kombination aus extremen pH-Werten und hohen Temperaturen den Sensor mehr belastet als nur hohe Temperatur bei pH 7 oder extreme pH-Werte bei Raumtemperatur.

Die Belastung des Sensors kann in so genannte Belastungsäquivalente klassifiziert werden, mit denen beispielsweise die Betriebsdauer unter den genannten Bedingungen zu gewichten ist.

Weitere Parameter sind beispielsweise die Verblockungsneigung des Diaphragmas des pH-Sensors, die über den Diaphragmenwiderstand messbar ist, die Abrasion am pH-sensitiven Glas, die über den Glaswiderstand ermittelt werden kann, die Steilheit der pH-Änderung oder der Temperaturänderung, sowie die Anzahl an Sterilisationen.

Diese Parameter können zusätzlich in die Bestimmung der Belastung eingehen, und werden - sofern relevant - in einem geeigneten Algorithmus erfasst, der im einfachsten Fall einen Zähler darstellt. Je höher die Belastung, desto mehr Belastungsäquivalente werden addiert. Die Zeitspanne zwischen zwei Kalibrationen wird dadurch gegenüber Betriebsbedingungen unter geringerer Belastung verkürzt. Je höher der Wert der Belastungsäquivalente, desto früher muss der Sensor kalibriert werden.

Mit anderen Worten beruht die Erfindung also darauf, eine Historie der letzten Kalibrationen mit den entsprechenden Daten auszuwerten und daraus gegebenenfalls unter Berücksichtigung sich ändernder Belastungen eines Sensors eine Zeit zu berechnen, zu der der Sensor rekalibriert / rejustiert werden muss, um die vom Betreiber geforderten Sensorparameter einzuhalten.

Auf diese Weise können unnötige Kalibrierungen eines Sensors in einer Messstelle vermieden werden, und der korrekte Messwert ist bei reduzierten Kosten gewährleistet.

Der erfindungsgemäße potentiometrischer Sensor, insbesondere zur Durchführung des Verfahrens nach einem der Vorhergehenden Ansprüche, umfasst: einen Primärsensor zum Erfassen einer potentiometrischen Messgröße, und zur Ausgabe eines messgrößenabhängigen Primärsignals; Schaltungsmittel zum Verarbeiten des Primärsignals oder eines davon abgeleiteten Signal, wobei die Schaltungsmittel einen Datenspeicher für aktuelle Kalibrierdaten und Kalibrierdaten mindestens einer früheren Kalibration umfassen; und Mittel um anhand der zeitlichen Entwicklung der Kalibrierdaten den Zeitraum bis zur nächsten Kalibrierung zu bestimmen. Der potentiometrische Sensor kann weiterhin mindestens einen Hilfssensors zur Ermittlung einer belastungsrelevanten Größe, insbesondere einen Temperatursensor umfassen.

Die Erfindung wird nun anhand eines in den Zeichnungen dargestellten Ausführungsbeispiels erläutert. Es zeigt:
Fig. 1: ein Beispiel für die Veränderung des Sensornullpunktes
   eines pH-Sensors [pH] in Abhängigkeit der Zeit [h] NP(t).
Fig. 2: ein Beispiel für die Veränderung der Empfindlichkeit
   [mV/pH] eines pH-Sensors in Abhängigkeit der Zeit [h] E(t).
Fig. 3: einen simulierten typischen Mess-Spannungsverlauf
   eines pH- Sensors über einen Zeitraum von 100h UpH(t);
Fig. 4: den Verlauf des geschätzten pH-Messfehlers für den Mess-Spannungs-Verlauf aus Fig. 3 anhand der Daten
   aus Fign. 1 und 2 als Funktion der Zeit und der Messspannung; und
Fign. 5: ein Beispiel für eine Wichtung der Standzeit mit Belastungsäquivalenten.

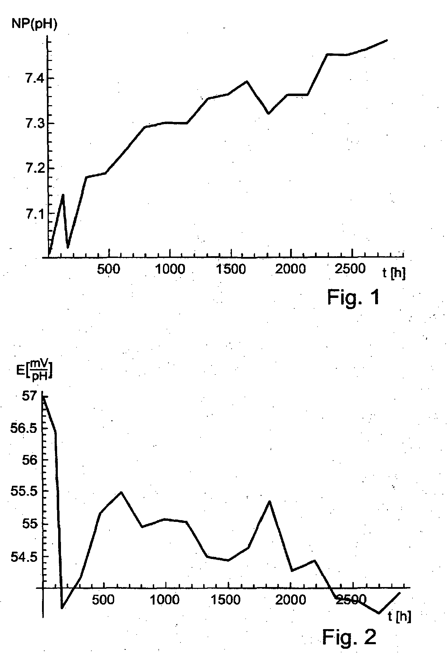

Die Diagramme in den Fign. 1 bis 4 betreffen Daten eines pH-Sensors. Wesentliche Kenngrößen eines pH- Sensors sind der Nullpunkt NP und die Empfindlichkeit E. Diese Kenngrößen müssen in regelmäßigen Abständen kalibriert werden, um die Messgenauigkeit des Messsystems zu gewährleisten.

Die Betriebsbedingungen beeinflussen die Veränderungen dieser Kenngrößen. Die Änderungsrate dieser Kenngrößen spiegelt sozusagen die Einsatzbedingungen wieder. Fign. 1 und 2 zeigen typische Daten von der zeitlichen Entwicklung des Nullpunkts und der Empfindlichkeit eines pH-Sensors über der Zeit. Jeder Datenpunkt entspricht einem Kalibrationswert der erfindungsgemäß in einem Datensatz abgespeichert wird. Über die Kenntnis des zeitlichen Verlaufes in der Vergangenheit kann man auf die Änderung in der Zukunft schließen. Im einfachsten Falle geschieht das durch eine lineare Ausgleichsfunktion AE(t) für die Empfindlichkeit und ANP(t) für den Nullpunkt.

Bild 1 und 2 zeigen den Verlauf von Sensordaten über 2820 Stunden. Eine ungefähre Regelmäßigkeit der Entwicklung von Nullpunkt und Empfindlichkeit für einen bestimmten Sensortyp ist die Voraussetzung für eine Prognose für die Entwicklung der Sensorparameter seit der letzten Kalibration. Auf dieser Basis kann der nächste Kalibrationszeitpunkt ermittelt werden. Die fraglichen Zeitspannen können je nach Sensortyp und Belastung beispielsweise zwischen etwa 10 Stunden und einigen Tagen schwanken.

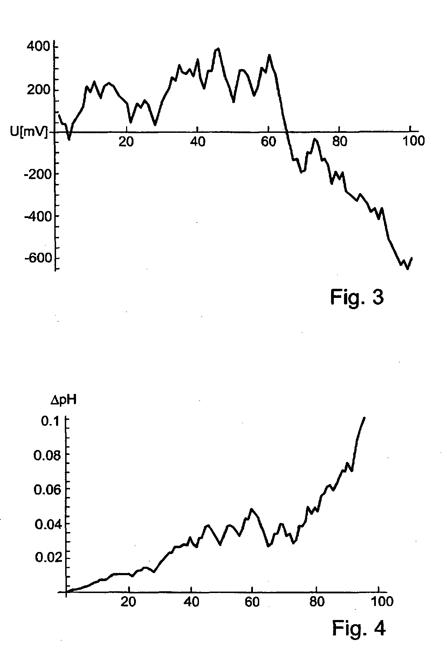

Aus den historischen Daten von NP und E kann AE(t) und ANP(t) abgeleitet werden. Somit ist eine Hypothese zur zeitlichen Änderung von E und NP aufstellbar. Während der pH-Messung über in den 100h seit der Kalibration nach 2820 Betriebsstunden, dargestellt in Fig. 3 als simulierten Mess-Spannungsverlauf eines pH-Sensors über der Zeit wird der pH - Wert pHMESS aber aus den Kalibrierdaten des Zeitpunktes t=2820h ermittelt.

Auf der Grundlage der Messspannung und den hypothetischen Kenndaten EHYP und NPHYP für einen Zeitpunkt >2820h kann ein hypothetischer pH- Messwert pHHYP berechnet werden. Die Differenz aus pHHYP und pHMESS kann als pH-Messfehler gelten. Dieser ist in Fig. 4 für die auf 2820 h folgenden 100h dargestellt.

Ein Nutzer kann dem Messumformer für ihn tolerierbare Fehler vorgeben. Bei Erreichen dieses Wertes wird eine Aufforderung zur Kalibration generiert. Wenn wie hier im Beispiel ein maximaler absoluter pH- Fehler von 0.06 pH vorgegeben wird, würde nach ca. 85h die Aufforderung zum Kalibrieren generiert.

Das vorliegende Verfahren lässt sich auch auf Basis relativer Fehler realisieren.

Das beschriebene Verfahren fand bisher ohne die Berücksichtigung von Belastungsäquivalenten statt, was bei gleichbeibenden Belastungen gerechtfertigt ist. Bei schwankenden Belastungen ist die Berücksichtigung von Belastungsäquivalenten, eine Gewichtung der Betriebsdauer mit Belastungsäquivalenten vorteilhaft. Typische Werte von Belastungsäquivalenten für einen bestimmten pH-Sensor sind in Tabelle I angegeben:

**Tabelle I**

**Tabelle 1**

| **pH** | **T [°C]** | | | | | |
|---|---|---|---|---|---|---|
| | **-20 ... 20** | **20 ... 40** | **40 ... 60** | **60 ... 80** | **80... 100** | **100 ... 120** |
| **14** ≥ **pH** > **12** | 4 | 8 | 12 | 16 | 20 | 24 |
| **12** ≥ **pH** > **10** | 3 | 6 | 9 | 12 | 15 | 18 |
| **10** ≥ **pH** > **8** | 2 | 4 | 6 | 8 | 10 | 12 |
| 8 ≥ pH > 6 | 1 | 2 | 3 | 4 | 5 | 6 |
| **6 ≥ pH > 4** | 2 | 4 | 6 | 8 | 10 | 12 |
| **4** ≥ **pH** > **2** | 3 | 6 | 9 | 12 | 15 | 18 |
| **2** > **pH** > **0** | 4 | 8 | 12 | 16 | 20 | 24 |

Dieses Prinzip kann einfach mit einem Belastungszähler implementiert werden, bei dem pro Zeiteinheit das aktuelle Belastungsäquivalent zur Belastungsbilanz addiert wird. Die Prognose zur Standzeit bis zur nächsten Kalibration ist demnach ein Prognose über die Belastungsäquivalente bis zur nächsten Kalibration.

Wenn beispielsweise der Sensor aus dem obigen Beispiel in dem Zeitraum vor der letzten Kalibrierung bei 2820 Stunden einem mittleren Belastungäquivalent von <Bä> = 4 ausgesetzt war, und pro Minute das aktuelle Belastungsäquivalent addiert wird, dann wäre im obigen Beispiel eine Prognose für eine Belastungsstandzeit von 85*60*4 = 20400 Belastungsäquivalentminuten anstelle der 85 Stunden gegeben worden.

Bei einer Erhöhung der mittleren Belastung auf ein Belastungsäquivalent von 8 nach d er Kalibrierung führt dazu, dass die 20400 Belastungsäquivalentminuten bereits nach 42,5 Stunden ausgeschöpft sind. Eine dem Sensor zugeordnete Überwachungseinrichtung, welche die Belastungsäquivalente aufaddiert, würde dementsprechend bereits nach 42, 5 Stunden bzw. einer Gesamtbetriebszeit von 2862,5 Stunden eine Kalibration anfordern. Bei geringerer Belastung würde die Zeit dagegen mit einem geringeren Faktor gewichtet werden, so dass beispielsweise bei einem Belastungsfaktor von 1 die nächste Belastung erst nach 340 Stunden angefordert würde.

In einer Weiterbildung dieses Gesichtspunkts der Erfindung kann der Einfluss des Belastungsfaktors auf die Prognose der Zeit bis zur nächsten Kalibrierung gewichtet werden, beispielsweise um Sicherheitsaspekte zu berücksichtigen. So kann etwa eine Steigerung der Belastung gegenüber dem Zeitabschnitt vor der letzten Kalibration, auf dessen Basis die Prognose für den laufenden Zeitabschnitt erstellt wurde, voll angerechnet werden, während eine Abnahme der Belastung, die zu einer Verlängerung der Standzeit bis zur nächsten Kalibration führt, mit einem geringeren Gewicht berücksichtigt werden, um übermäßige Verlängerungen der Standzeit zwischen zwei Kalibrationen von einem Zeitraum zum nächsten zu vermeiden. Hierzu reicht die einfache Summierung der Belastungsäquivalente nicht aus, denn auf diese Weise ist nicht zu erkennen ob die Belastung zu oder abgenommen hat. Stattdessen wird zwar weiterhin in einem ersten Zähler die aktuelle Belastung aufaddiert, um nach Ablauf der Standzeit eine tatsächliche mittlere Belastung zu bestimmen. Die Prognose für die Standzeit wird nunmehr in Belastungszeiteinheiten angegeben, die mit der mittleren Belastung des gerade vergangenen Kalibrationsintervalls normiert werden. Den 20400 Belastungsäquivalentminuten bei einem mittleren Belastungsäquivalent von 4 entsprechen also 5100 Minuten.

Zur Bestimmung des Endes der aktuellen Standzeit wird die aktuelle Belastung in jeder Zeiteinheit durch das mittlere Belastungsäquivalent des vergangenen Kalibrierzeitraums geteilt und folgendermaßen in einem zweiten Zähler bilanziert. Wenn der Quotient mindestens 1 beträgt, wird er unverändert aufaddiert, anderenfalls wird die Wurzel des Quotienten aufaddiert. Bei Erreichen des Prognosewertes - hier 5100 normierten Minuten - wird eine neue Kalibration angefordert. Die Einführung der Wurzelfunktion zur Ermittlung des Gewichtungsfaktor bei abnehmenden Belastungen führt dazu, die Kalibrierzeiträume langsamer verlängert als verkürzt werden können. Dies führt zwar zu einer Erhöhung des Kalibrieraufwands gegenüber einer Lösung ohne diesen Faktor, dient aber der Sicherheit.

So führt eine Verringerung der mittleren Belastung im laufenden Kalibrationszeitraum um einen Faktor 4 lediglich zu einer Verdoppelung der Dauer des Kalibrationszeitraums und nicht zu einer Vervierfachung.

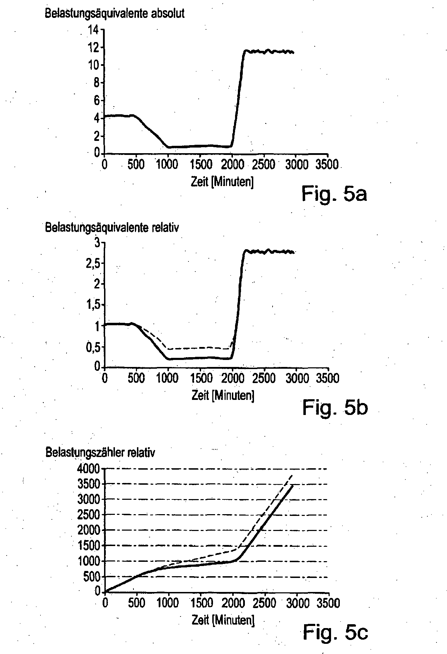

Fign. 5 a bis c Stellen diesen Gesichtspunkt der Erfindung noch einmal im Zusammenhang dar. Fig. 5a zeigt die zeitliche Entwicklung der absoluten Belastungsäquivalente an einem Sensor über der Zeit seit der letzten Kalibration. Das mittlere Belastungsäquivalent im Zeitintervall vor der letzten Kalibration betrug 4,2. Der Verlauf der normierten Belastung im aktuellen Intervall ist in Fig. 5b aufgetragen. Die durchgezogene Normierung zeigt die gewöhnliche Normierung durch einfache Division. Die gestrichelte Linie zeigt die Normierung "mit Sicherheitsreserve", wonach von Quotienten unter 1 deren Wurzel als relative Belastung gezählt wird. Die resultierende Summe des Zählerstands zu den relativen Belastungen ist für die beiden unterschiedlichen Gewichtungen in Fig. 5c dargestellt. Die durchgezogene Linie folgt für gewöhnliche Normierung und die gestrichelte Linie für die Normierung mit Sicherheitsreserve.

Die Auswirkungen auf den Kalibrationszeitraum sind wie folgt.

Wäre beispielsweise ein Zeitraum von 1000 Minuten bei gleich bleibender Belastung von 4,2 Belastungsäquivalenten prognostiziert worden, so würde die einfache Normierung aufgrund der gesunkenen Belastung nach einer Standzeit von 2020 Minuten bis zur nächsten Kalibrationsanforderung bewirken. Die Normierung mit Sicherheitsreserve bewirkt dagegen eine geringere Verlängerung der Standzeit; die Kalibrationsanforderung wird bereits nach 1300 Minuten ausgegeben.

Eine ggf. zu frühe Kalibrationsanforderung bei sinkenden Belastungen wird dadurch korrigiert, dass bei der nächsten Kalibration die tatsächliche Veränderung der Kalibrationsdaten berücksichtigt wird und auf diese Weise das nächste Intervall bei geringeren Veränderungen der Kalibrationsdaten wieder länger festgelegt wird.

## Patentansprüche

1. Verfahren zur Funktionsüberwachung eines Sensors, insbesondere eines potentiometrischen Sensors, umfassend:
wiederholtes Erfassen von Datensätzen mit sensorspezifischen Kalibrierdaten;
Speichern der erfassten Datensätze mit sensorspezifischen Kalibrierdaten;
Analyse der zeitlichen Entwicklung der Kalibrierdaten anhand der gespeicherten Datensätze;
**gekennzeichnet durch** den weiteren Schritt:
Bestimmen einer mit einem Belastungsfaktor gewichteten Zeit bis zur nächsten Kalibrierung zumindest anhand der analysierten zeitlichen Entwicklung der Kalibrierdaten.

2. Verfahren nach Anspruch 1, wobei die ermittelte mit einem Belastungsfaktor gewichtete Zeit unmittelbar nach der Bestimmung ausgegeben wird.

3. Verfahren nach Anspruch 1 oder 2, wobei die ermittelte mit einem Belastungsfaktor gewichtete Zeit bis zur nächsten Kalibration, der Kalibrierzeitraum, als Restzeit gespeichert wird und als Vergleichsgröße für einen Zähler dient, welcher die Betriebsdauer zählt.

4. Verfahren nach Anspruch 3, wobei der Zähler die Betriebsdauer mit aktuellen Belastungsäquivalenten wichtet.

5. Verfahren nach einem der vorhergehenden Ansprüche wobei die Kalibrierdaten im Falle eines potentiometrischen Sensors, insbesondere eines pH-Sensors, Steilheit und Nullpunkt bzw. Isothermenschnittpunkt umfassen.

6. Verfahren nach einem der vorhergehenden Ansprüche wobei das wiederholte Erfassen von Datensätzen mit der Inbetriebnahme eines neuen Sensors zunächst nach mindestens einem vorgegebenen Zeitintervall erfolgt, und der resultierende aktuelle Datensatz der sensorspezifischen Kalibrierdaten zur Bestimmung des zeitlichen Entwicklung der Kalibrierdaten und des nächsten Kalibrierzeitpunktes herangezogen wird.

7. Verfahren nach einem der vorhergehenden Ansprüche, wobei zur Analyse der zeitlichen Entwicklung der Kalibrierdaten die Differenz zu den Kalibrierdaten des vorangegangenen Datensatzes gebildet wird.

8. Verfahren nach einem der vorhergehenden Ansprüche, wobei in die Bestimmung des Kalibrierzeitraums bzw. des nächsten Zeitpunkts für eine Kalibrierung bzw. eine Justierung neben der Veränderung der Kalibrierdaten die minimal zulässige Steilheit bzw. maximale Nullpunktverschiebung eingehen.

9. Verfahren nach einem der vorhergehenden Ansprüche wobei die Bestimmung des nächsten Kalibrierzeitpunkts unter Zugrundelegen einer linearen Extrapolation der Veränderung der Kalibrierdaten über die Zeit erfolgt.

10. Verfahren nach Anspruch 9, wobei die Zeit mit Belastungsäquivalenten oder davon abgeleiteten Größen gewichtet oder normiert wird.

11. Verfahren nach einem der vorhergehenden Ansprüche, wobei Belastungsäquivalente von einer oder mehrerer der folgenden Größen abhängen: der Temperatur, dem pH-Wert, der Abrasion des Sensors, der Steilheit der pH-Änderung oder der Temperaturänderung, die Anzahl von Sterilisationen des Sensors.

## Claims

1. Procedure designed to monitor the functioning of a sensor, particularly a potentiometric sensor, comprising the following steps:
Repeated recording of data records with sensor-specific calibration data;
Saving of recorded data records with sensor-specific calibration data;
Analysis of the development of the calibration data over time using the data records saved;
**characterized by** a further step:
Determination of a time, which is weighted by a load factor, until the next calibration at least using the analyzed development of the calibration data over time.

2. Procedure as claimed in Claim 1, wherein the determined time, weighted by a load factor, is output immediately after being determined.

3. Procedure as claimed in Claim 1 or 2, wherein the determined time, weighted by a load factor, until the next calibration, the calibration period, is saved as a remaining time and is used as a comparative variable for a counter which counts the operating time.

4. Procedure as claimed in Claim 3, wherein the operating time is weighted by the counter with current load equivalents.

5. Procedure as claimed in one of the previous claims, wherein, in the case of a potentiometric sensor, particularly a pH sensor, the calibration data comprise the slope and the zero point or isothermal intersection point.

6. Procedure as claimed in one of the previous claims, wherein, when a new sensor is commissioned, the repeated recording of data records initially takes place after at least a predefined interval and the resulting current data record for sensor-specific calibration data is used to determine the development of the calibration records over time and the next calibration time.

7. Procedure as claimed in one of the previous claims, wherein the difference to the calibration data for the previous data record is calculated for the analysis of the development of the calibration data over time.

8. Procedure as claimed in one of the previous claims, wherein, in addition to the change in the calibration data, the minimum permitted slope or the maximum zero point shift are considered when determining the calibration period or the next time for a calibration or adjustment.

9. Procedure as claimed in one of the previous claims, wherein the next time of calibration is determined on the basis of a linear extrapolation of the change in calibration data over time.

10. Procedure as claimed in Claim 9, wherein the time is weighted or normalized with load equivalents or variables derived therefrom.

11. Procedure as claimed in one of the previous claims, wherein load equivalents depend on one or more of the following variables: the temperature, the pH value, the abrasion of the sensor, the slope of the pH change or temperature change, the number of sensor sterilizations.

## Revendications

1. Procédé destiné à la surveillance du fonctionnement d'un capteur, notamment un capteur potentiométrique, comprenant les étapes suivantes :
Acquisition répétée de blocs de données contenant des données d'étalonnage spécifiques au capteur,
Enregistrement des blocs de données acquis, contenant des données d'étalonnage spécifiques au capteur,
Analyse de l'évolution dans le temps des données d'étalonnage au moyen des blocs de données enregistrés,
**caractérisé par** l'étape supplémentaire :
Détermination d'un temps pondéré avec un facteur de charge jusqu'au prochain étalonnage, au moins sur la base de l'analyse de l'évolution dans le temps des données d'étalonnage.

2. Procédé selon la revendication 1, pour lequel le temps déterminé, pondéré avec un facteur de charge, est affiché immédiatement après la détermination.

3. Procédé selon la revendication 1 ou 2, pour lequel le temps pondéré avec un facteur de charge, déterminé jusqu'au prochain étalonnage, l'intervalle d'étalonnage, est enregistré en tant que temps résiduel et sert de grandeur comparative à un compteur, qui compte la durée de fonctionnement.

4. Procédé selon la revendication 3, pour lequel le compteur effectue la pondération de la durée de fonctionnement avec les charges équivalentes actuelles.

5. Procédé selon l'une des revendications précédentes, pour lequel les données d'étalonnage comprennent, dans le cas d'un capteur potentiométrique-notamment un capteur pH -, la pente et le zéro ou le point d'intersection isotherme.

6. Procédé selon l'une des revendications précédentes, pour lequel l'acquisition répétée de blocs de données intervient avec la mise en service d'un nouveau capteur, dans un premier temps, d'après au moins un intervalle de temps prédéfini, et le bloc de données actuel en résultant, relatif aux données d'étalonnage spécifiques au capteur, est utilisé pour la détermination de l'évolution dans le temps des données d'étalonnage et de la prochaine échéance d'étalonnage.

7. Procédé selon l'une des revendications précédentes, pour lequel la différence avec les données d'étalonnage du bloc de données précédent est formée en vue de l'analyse de l'évolution dans le temps des données d'étalonnage.

8. Procédé selon l'une des revendications précédentes, pour lequel la pente minimale admissible ou le décalage maximal du zéro sont considérés pour la détection de l'échéance d'étalonnage ou de la prochaine échéance d'étalonnage ou un réglage en plus du changement des données d'étalonnage.

9. Procédé selon l'une des revendications précédentes, pour lequel la détermination de la prochaine échéance d'étalonnage est effectuée sur la base d'une extrapolation linéaire du changement des données d'étalonnage au fil du temps.

10. Procédé selon la revendication 9, pour lequel le temps est pondéré ou normalisé avec des charges équivalentes ou des grandeurs dérivées de celles-ci.

11. Procédé selon l'une des revendications précédentes, pour lequel les charges équivalentes dépendent d'une ou de plusieurs parmi les grandeurs suivantes : la température, le pH, l'abrasion du capteur, la pente de la variation du pH ou le changement de température, le nombre de stérilisations du capteur.
